# EUROPEAN PATENT SPECIFICATION

(11) **EP 2 268 507 B1**
(45) Date of publication and mention of the grant of the patent: **10.06.2015**
(21) Application number: 09738463.0
(22) Date of filing: 29.04.2009
(51) Int. Cl.: B60R 21/00, B60R 25/00, B60R 21/01, B60R 21/0132, H04M 1/725, B60R 25/10, G08B 25/01

(54) **SAFETY APPARATUS FOR MOTOR VEHICLES OR THE LIKE**
SICHERHEITSGERÄT FÜR KRAFTFAHRZEUGE ODER DERGLEICHEN
APPAREIL DE SÉCURITÉ POUR VÉHICULES À MOTEUR OU ANALOGUES

(30) Priority: 29.04.2008 IT MO20080127
(43) Date of publication of application: 05.01.2011
(73) Proprietor: Meta System S.p.A., 42100 Reggio Emilia (IT)
(72) Inventor: SIMONAZZI, Giuseppe, I-42100 Reggio Emilia (IT)
(74) Representative: Brunacci, Marco
(86) International application number: PCT/IB2009/005411
(87) International publication number: WO 2009/133450

(56) References cited:
- EP-A- 1 306 269
- EP-A- 1 494 492
- US-A1- 2003 050 039
- US-A1- 2003 212 480
- US-A1- 2005 030 224

## Description

### Technical Field

The present invention relates to a safety apparatus for motor vehicles or the like.

### Background Art

The growing number of road accidents has led to the study and development of an increasing number of instruments for the improvement of motor vehicle safety, many of which have become commonplace or even obligatory.

In particular, the use of mainly electronic control equipment is known, generally integrated into the electronics of the motor vehicle itself and used to notify the driver of potentially hazardous situations and to directly and dynamically intervene on the vehicle (active safety), to intervene in the event of an accident to minimise the negative consequences on passengers (passive safety) or again, to intervene following an accident to speed up the presence of medical or other kinds of assistance on site.

The known apparatus involve a control unit, generally installed inside the vehicle compartment and linked to a plurality of sensors installed on the vehicle to detect, e.g., any knocks of the vehicle.

The sensors used may e.g. be composed of one or more accelerometers which detect sharp accelerations and decelerations of the motor vehicle due to the occurrence of an accident.

The known safety apparatus are however susceptible to improvements.

These apparatus, in fact, connect different devices together such as sensors, control units, signalling devices or the like, which are all installed in different positions on the motor vehicle.

Consequently, the correct connection between all the devices, and therefore the correct operation of the apparatus itself, is not always ensured, particularly following the occurrence of an accident.

The document US 2003/212480 A1 discloses a mission control unit which includes a collision detection sensor and a processor. The processor initiates different collision detection events when a collision condition is indicated by the collision detection sensor. The mission control unit also automatically establishes a wireless communication link to a call center during a collision condition according to the preamble of claim 1. The document US 2005/030224 A1 discloses methods, systems and mobile terminal for vehicle crash detection wherein a vehicle crash is detected using a positioning system on the vehicle. A wireless emergency signal may be 5 generated responsive to the detection of a crash condition.

However, also these known safety apparatus are susceptible to improvements.

### Object of the Invention

The main object of the present invention is to provide a safety apparatus for motor vehicles or the like which is able to reduce the risk of malfunction even 0 after an accident.

Another object of the present invention is to provide a safety apparatus for motor vehicles or the like which allows to achieve the above mentioned improvements of the background art in the ambit of a simple, rational, easy, effective to use and low cost solution.

The above-described objects are achieved by the present safety apparatus for motor vehicles or the like, comprising at least a support element associable with a motor vehicle or the like and suitable for supporting at least one instant acceleration/deceleration measuring device for said motor vehicle along at least one direction, characterised in that it comprises at least one communication unit, integrally associated with said support element, associated with said acceleration/deceleration measuring device and suitable for sending at least one emergency signal in the event of said vehicle having an accident, detected by said acceleration/deceleration measuring device.

### Brief Description of the Drawings

Other characteristics and advantages of the present invention will become more evident from the description of a form of preferred, but not sole, embodiment of a safety apparatus for motor vehicles or the like, illustrated purely as an example but not limited to the annexed drawings in which:

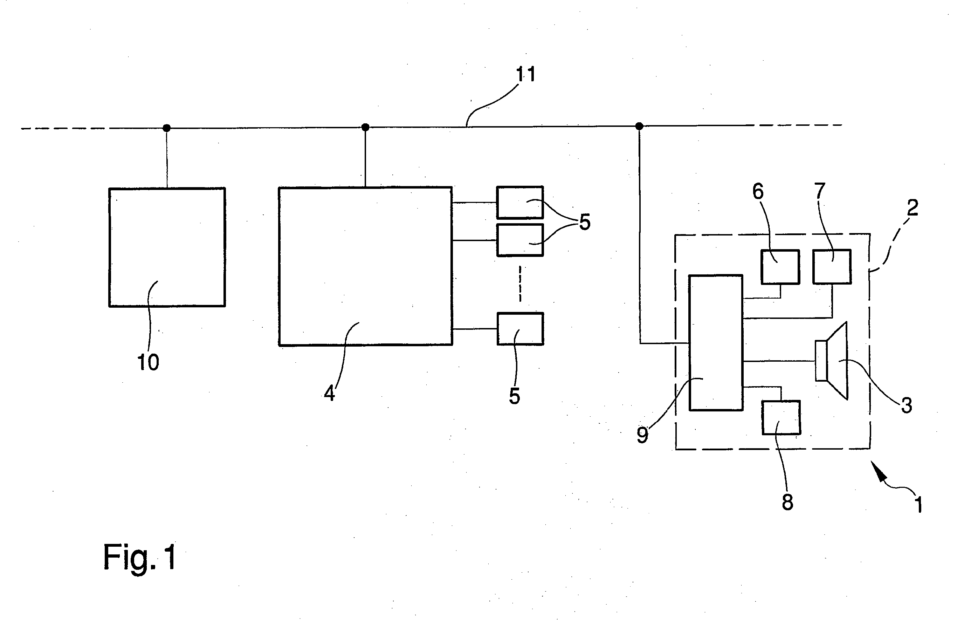

figure 1 is a general functional diagram of the apparatus according to the invention.

### Embodiments of the Invention

With particular reference to such figures, by 1 is globally indicated a safety apparatus, usable in particular in safety systems and in anti-theft/anti-break-in systems which may be fitted on a motor vehicle or the like.

The apparatus 1 comprises a support element, shown in the figure by reference 2, composed of a substantially box-shaped container body which may be fixed to a motor vehicle by means of suitable brackets.

In particular, the container body 2 is fixed in a substantially protected position of the vehicle, such as e.g. in the engine compartment, in order to make unwanted access and tampering of the apparatus 1 more difficult and to guarantee the protection of the apparatus itself following an accident of the motor vehicle.

Different positions of the container body 2 may, e.g., involve fixing near one of the wheelhouses of the motor vehicle.

Advantageously, the container body 2 is composed of the casing of an electronic siren 3 suitable for giving off an acoustic alarm signal.

The electronic siren 3, in particular, is associated with a unit 4 on the motor vehicle, which may be composed of a traditional unit of an anti-theft/anti-break-in system positioned inside the vehicle compartment.

The unit 4 may, e.g., be associated with a plurality of detection sensors 5 installed on board the motor vehicle of the type of ultrasonic sensors or the like suitable for detecting any break-ins inside the vehicle compartment.

Inside the container body 2, the apparatus 1 comprises an instant vehicle acceleration/deceleration measuring device, indicated in the figure generically by reference 6.

The acceleration/deceleration measuring device 6 may be used to detect any accidents of the vehicle and at the same time to estimate the dynamics and intensity of the knocks.

Usefully, the acceleration/deceleration measuring device 6 may be used to detect any variations in the angle of the vehicle in the event of an attempted burglary by lifting.

In particular, the acceleration/deceleration measuring device 6 is suitable for measuring the instant vehicle acceleration/deceleration along three directions substantially at right angles with each other and, in particular, may be composed of one or more three-axis accelerometers.

Usefully, the arrangement of the three acceleration/deceleration measurement directions with respect to the vehicle is not important for the purposes of the correct operation of the accelerometer 6.

This ensures great freedom in the positioning of the accelerometer 6, and therefore, of the whole apparatus 1, during installation on the vehicle, guaranteeing at the same time the detection of the variations in angle along any direction in a safe and reliable manner.

This therefore makes the positioning of the apparatus 1 free of any mechanical constraints concerning the housing thereof inside the engine compartment of the vehicle it is fitted on, simplifying installation.

Inside the container body 2 a communication unit is also housed, indicated in the figure generally by reference 7, associated with the accelerometer 6 and suitable for sending an emergency signal to a remote control unit in the event of an accident.

The use of the communication unit 7 is not however excluded for sending different types of signals, such as alarm signals in the event of vehicle theft.

In particular, the communication unit 7 comprises a transmitter, and possibly a receiver working within the range of frequencies with mobile phone protocols of the GSM, GPRS, UMTS type or the like.

In the event of an accident detected by the accelerometer 6, the communication unit 7 is able to send an emergency signal and activate a call to one or more preset phone numbers, such as, e.g., private numbers or emergency services to call for medical assistance or the intervention of the police or the like.

The presence of an internal antenna associated with the communication unit 7 makes the apparatus 1 substantially autonomous in the management of communications.

Usefully, the apparatus 1 may have at least a storage unit 8 suitable for storing the management software of the apparatus and other data such as, e.g., the preset phone numbers to be called in the event of an emergency.

The apparatus 1 comprises an electronic control unit 9, of the microprocessor type or the like, connected to the accelerometer 6, the communication unit 7, the electronic siren 3 and the storage unit 8. The electronic control unit 9 may be made, e.g., on a printed circuit arranged and fixed inside the container body 2. The electronic control unit 9 is associated with the unit 4 on the vehicle and is able to coordinate the operations of the accelerometer 6 with those of the communication unit 7, as well as to activate the electronic siren 3 upon command of the unit 4 of the vehicle.

Advantageously, the apparatus 1, in particular the electronic control unit 9, may be connected to a locating device 10 which tracks the position of the vehicle.

In particular, the locating device 10 may be composed of a satellite signal receiver and a satellite navigation system Global Positioning System (GPS), Galileo Positioning System or the like, installed on board the vehicle.

The position of the vehicle detected by the locating device 10 may be sent by the communication unit 7 in the event of an accident. Usefully, such detected position may be stored periodically on the storage unit 8, thus allowing to send a recently detected position also in the event that, due to an accident, an interruption is caused in the connection between the locating device 10 and the apparatus 1.

Alternatively, the apparatus 1 may envisage inside the container body 2 a locating device of the vehicle position which is operatively connected to the electronic control unit 9.

Usefully, the apparatus 1, in particular the electronic control unit 9, is connected to the unit 4, the locating device 10 and other devices which may be present on the vehicle through an electrical channel 11.

Usefully, the electrical channel 11 is composed of or in any case is connected to the traditional CAN (Controller Area Network) channel which is already fitted on the vehicle. This avoids the need for installation of other conductor cables and simplifies the installation operations for the apparatus 1.

However, the connection of the apparatus 1 using a different type of channel 11 is not excluded.

The apparatus 1 also has a connection port for the connection to the electrical channel 11 and therefore to the unit 9.

Usefully, this connection port is composed of a traditional connector, of the type usually present on known electrical sirens and used in anti-theft or anti-break-in systems for motor vehicles.

In the event of an anti-theft or anti-break-in system already being installed on the vehicle, this allows the installation of the apparatus 1 simply by replacing the traditional electrical siren already installed.

Advantageously, the apparatus 1 may be powered directly from the vehicle battery, or alternatively, may have an internal battery which guarantees correct operation even in the event of an accident.

It has in practice been shown how the described invention achieves the intended objects, and in particular the fact is underlined that the positioning of the communication unit and the accelerometer inside a single container body housing the siren, inside the engine compartment of the vehicle or in any case in a place which is difficult to reach, reduces the risk of tampering or of malfunctioning due to the occurrence of an accident.

The invention thus conceived is susceptible to numerous modifications and variations, all of which falling within the scope of the following claims.

## Claims

1. Safety apparatus (1) for motor vehicles, comprising at least a support element (2) associable with a motor vehicle and suitable for supporting at least one instant acceleration/deceleration measuring device (6) for said motor vehicle along at least one direction, at least one communication unit (7), integrally associated with said support element (2), associated with said acceleration/deceleration measuring device (6) and suitable for sending at least one emergency signal in the event of said vehicle halving an accident, detected by said acceleration/deceleration measuring device (6), **characterized in that** it comprises at least an electronic siren (3) for anti-theft/anti-break-in systems, supported, by said support element (2) and suitable for giving off an acoustic alarm signal, wherein said support element (2) comprises at least a container body (2) associable with said motor vehicle in a substantially protected position and suitable for housing said acceleration/deceleration measuring device (6), said communication unit (7) and said electronic siren (3).

2. Apparatus (1) according to claim 1, **characterised in that** said support element (2) may be fixed in the engine compartment of said motor vehicle.

3. Apparatus (1) according to claim 1, **characterised in that** said support element (2) may be fixed at at least one of the wheelhouses of said motor vehicle.

4. Apparatus (1) according to claim 1, **characterised in that** it comprises at least an electronic control unit (9) associable with at least one between said acceleration/deceleration measuring device (6), said communication unit (7) and said electronic siren (3).

5. Apparatus (1) according to claim 4, **characterised in that** said electronic control unit (9) is associable with at least one unit (4) on said motor vehicle.

6. Apparatus (1) according to claim 1, **characterised in that** said communication unit (7) comprises at least a transmitter and/or a received working within the range of frequencies with mobile phone protocols.

7. Apparatus (1) according to claim 1, **characterised in that** said communication unit (7) comprises at least an antenna for the transmission/receiving of at least a signal.

8. Apparatus (1) according to claim 1, **characterised in that** said acceleration/deceleration measuring device (6) is suitable for measuring the instant acceleration/deceleration of said vehicle along three directions substantially at right angles with each other.

9. Apparatus (1) according to claim 1, **characterised in that** it is associable with at least a locating device (10) for the position of said motor vehicle.

10. Apparatus (1) according to claim 1, **characterised in that** it comprises at least a locating device (10) for the position of said motor vehicle.

11. Apparatus (1) according to claims 9 or 10, **characterised in that** said locating device (10) comprises at least a satellite signal receiver.

12. Apparatus (1) according to claims 5 and 9, **characterised in that** said electronic control unit (9) is associable with at least one between said unit (4) and said locating device (10) through at least an electrical channel (11).

13. Apparatus (1) according to claim 1, **characterised in that** said support element (2) comprises at least a fixing bracket of said container body (2) on said motor vehicle.

14. Apparatus (1) according to claim 1, **characterised in that** it comprises at least an internal power battery.

15. Apparatus (1) according to claim 1, **characterised in that** it is associable with the power battery of said motor vehicle.

## Patentansprüche

1. Sicherheitsvorrichtung (1) für Motorfahrzeuge, umfassend mindestens ein Stützelement (2), das mit einem Motorfahrzeug verbindbar ist und zum Stützen mindestens einer Vorrichtung (6) für das Motorfahrzeug zum Messen einer momentanen Beschleunigung/Verlangsamung entlang mindestens einer Richtung geeignet ist, mindestens eine Kommunikationseinheit (7), die integral mit dem Stützelement (2) verbunden ist, mit der Vorrichtung (6) zum Messen einer momentanen Beschleunigung/Verlangsamung verbunden ist und zum Senden mindestens eines Notfallsignals in dem Fall, dass das Fahrzeug einen Unfall hat, der von der Vorrichtung (6) zum Messen einer momentanen Beschleunigung/Verlangsamung detektiert wird, geeignet ist, **dadurch gekennzeichnet, dass** sie mindestens eine elektronische Sirene (3) für Anti-Diebstahl-/Anti-Einbruch-Systeme umfasst, die von dem Stützelement (2) gestützt wird und geeignet ist, um ein akustisches Alarmsignal abzugeben, wobei das Stützelement (2) mindestens einen Behälterkörper (2) umfasst, der mit dem Motorfahrzeug in einer im Wesentlichen geschützten Position verbindbar ist und zur Unterbringung der Vorrichtung (6) zum Messen einer momentanen Beschleunigung/Verlangsamung, der Kommunikationseinheit (7) und der elektronischen Sirene (3) geeignet ist.

2. Vorrichtung (1) nach Anspruch 1, **dadurch gekennzeichnet, dass** das Stützelement (2) in dem Motorraum des Motorfahrzeugs befestigt werden kann.

3. Vorrichtung (1) nach Anspruch 1, **dadurch gekennzeichnet, dass** das Stützelement (2) an mindestens einem der Radkästen der Motorfahrzeugs befestigt werden kann.

4. Vorrichtung (1) nach Anspruch 1, **dadurch gekennzeichnet, dass** sie mindestens eine elektronische Steuer- und Regeleinrichtung (9) umfasst, die mit mindestens einer von der Vorrichtung (6) zum Messen einer momentanen Beschleunigung/Verlangsamung, der Kommunikationseinheit (7) und der elektronischen Sirene (3) verbindbar ist.

5. Vorrichtung (1) nach Anspruch 4, **dadurch gekennzeichnet, dass** die elektronische Steuer- und Regeleinrichtung (9) mit mindestens einer Einheit (4) an dem Motorfahrzeug verbindbar ist.

6. Vorrichtung (1) nach Anspruch 1, **dadurch gekennzeichnet, dass** die Kommunikationseinheit (7) mindestens einen Sender und/oder Empfänger, der innerhalb des Frequenzbereichs mit Mobilfunkprotokollen arbeitet, umfasst.

7. Vorrichtung (1) nach Anspruch 1, **dadurch gekennzeichnet, dass** die Kommunikationseinheit (7) mindestens eine Antenne für das Senden/Empfangen von mindestens einem Signal umfasst.

8. Vorrichtung (1) nach Anspruch 1, **dadurch gekennzeichnet, dass** die Vorrichtung (6) zum Messen einer momentanen Beschleunigung/Verlangsamung zum Messen der momentanen Beschleunigung/Verlangsamung des Fahrzeugs entlang dreier Richtungen, die im Wesentlichen rechtwinklig zueinander verlaufen, geeignet ist.

9. Vorrichtung (1) nach Anspruch 1, **dadurch gekennzeichnet, dass** sie mit mindestens einem Ortungsgerät (10) für die Position des Motorfahrzeugs verbindbar ist.

10. Vorrichtung (1) nach Anspruch 1, **dadurch gekennzeichnet, dass** sie mindestens ein Ortungsgerät (10) für die Position des Motorfahrzeugs umfasst.

11. Vorrichtung (1) nach Anspruch 9 oder 10, **dadurch gekennzeichnet, dass** das Ortungsgerät (10) mindestens einen Satellitensignalempfänger umfasst.

12. Vorrichtung (1) nach Anspruch 5 und 9, **dadurch gekennzeichnet, dass** die elektronische Steuer- und Regeleinrichtung (9) mit mindestens einer von der Einheit (4) und dem Ortungsgerät (10) durch mindestens einen elektrischen Kanal (11) verbindbar ist.

13. Vorrichtung (1) nach Anspruch 1, **dadurch gekennzeichnet, dass** das Stützelement (2) mindestens eine Befestigungsklammer des Behälterkörpers (2) an dem Motorfahrzeug umfasst.

14. Vorrichtung (1) nach Anspruch 1, **dadurch gekennzeichnet, dass** sie mindestens eine interne Energiebatterie umfasst.

15. Vorrichtung (1) nach Anspruch 1, **dadurch gekennzeichnet, dass** sie mit der Energiebatterie des Motorfahrzeugs verbindbar ist.

## Revendications

1. Appareil de sécurité (1) pour véhicules à moteur, comprenant au moins un élément de support (2) pouvant être associé à un véhicule à moteur et apte à supporter au moins un dispositif de mesure d'accélération/décélération instantanée (6) pour ledit véhicule à moteur le long d'au moins une direction, au moins une unité de communication (7) intégralement associée audit élément de support (2), associée audit dispositif de mesure d'accélération/décélération (6) et apte à envoyer au moins un signal d'urgence dans le cas où ledit véhicule a un accident détecté par ledit dispositif de mesure d'accélération/décélération (6), **caractérisé en ce qu'**il comprend au moins une sirène électronique (3) pour systèmes antivols/anti-intrusions, supportée par ledit élément de support (2) et apte à émettre un signal d'alarme sonore, ledit élément de support (2) comprenant au moins un corps de boîtier (2) pouvant être associé audit véhicule à moteur dans une position sensiblement protégée et apte à loger ledit dispositif de mesure d'accélération/décélération (6), ladite unité de communication (7) et ladite sirène électronique (3).

2. Appareil (1) selon la revendication 1, **caractérisé en ce que** ledit élément de support (2) peut être fixé dans le compartiment moteur dudit véhicule à moteur.

3. Appareil (1) selon la revendication 1, **caractérisé en ce que** ledit élément de support (2) peut être fixé à au moins l'un des compartiments des roues dudit véhicule à moteur.

4. Appareil (1) selon la revendication 1, **caractérisé en ce qu'**il comprend au moins une unité de commande électronique (9) pouvant être associée à au moins l'un(e) parmi ledit dispositif de mesure d'accélération/décélération (6), ladite unité de communication (7) et ladite sirène électronique (3).

5. Appareil (1) selon la revendication 4, **caractérisé en ce que** ladite unité de commande électronique (9) peut être associée à au moins une unité (4) sur ledit véhicule à moteur.

6. Appareil (1) selon la revendication 1, **caractérisé en ce que** ladite unité de communication (7) comprend au moins un émetteur et/ou un récepteur fonctionnant à l'intérieur de la plage des fréquences liées aux protocoles des téléphones mobiles.

7. Appareil (1) selon la revendication 1, **caractérisé en ce que** ladite unité de communication (7) comprend au moins une antenne pour la transmission/réception d'au moins un signal.

8. Appareil (1) selon la revendication 1, **caractérisé en ce que** ledit dispositif de mesure d'accélération/décélération (6) est apte à mesurer l'accélération/décélération instantanée dudit véhicule le long de trois directions formant sensiblement des angles droits les unes avec les autres.

9. Appareil (1) selon la revendication 1, **caractérisé en ce qu'**il peut être associé à au moins un dispositif de localisation (10) pour la position dudit véhicule à moteur.

10. Appareil (1) selon la revendication 1, **caractérisé en ce qu'**il comprend au moins un dispositif de localisation (10) pour la position dudit véhicule à moteur.

11. Appareil (1) selon les revendications 9 ou 10, **caractérisé en ce que** ledit dispositif de localisation (10) comprend au moins un récepteur de signaux de satellites.

12. Appareil (1) selon les revendications 5 et 9, **caractérisé en ce que** ladite unité de commande électronique (9) peut être associée à au moins l'un(e) parmi ladite unité (4) et ledit dispositif de localisation (10) par l'intermédiaire d'au moins une voie électrique (11).

13. Appareil (1) selon la revendication 1, **caractérisé en ce que** ledit élément de support (2) comprend au moins un étrier de fixation dudit corps de boîtier (2) sur ledit véhicule à moteur.

14. Appareil (1) selon la revendication 1, **caractérisé en ce qu'**il comprend au moins une batterie d'alimentation interne.

15. Appareil (1) selon la revendication 1, **caractérisé en ce qu'**il peut être associé à la batterie d'alimentation dudit véhicule à moteur.
